# EUROPEAN PATENT SPECIFICATION

(11) **EP 3 568 903 B1**
(45) Date of publication and mention of the grant of the patent: **10.09.2025**
(21) Application number: 18738842.6
(22) Date of filing: 16.01.2018
(51) Int. Cl.: H02K 35/06, H02K 1/34, H02K 7/18, H02K 39/00, E05B 81/84, E05B 47/00

(54) **DEVICE AND METHOD FOR MICRO TRANSIENT ENERGY HARVESTING GENERATOR ARRANGEMENT**
VORRICHTUNG UND VERFAHREN FÜR EINE MIKROGENERATORANORDNUNG ZUR VORÜBERGEHENDEN ENERGIEGEWINNUNG
DISPOSITIF ET PROCÉDÉ POUR AGENCEMENT DE GÉNÉRATEUR DE COLLECTE D'ÉNERGIE MICRO-TRANSITOIRE

(30) Priority: 16.01.2017 SE 1750032
(43) Date of publication of application: 20.11.2019
(73) Proprietor: Revibe Energy AB, 412 85 Göteborg (SE)
(72) Inventor: CEDERWALL, Per, 429 33 Kullavik (SE)
(74) Representative: Westpatent AB
(86) International application number: PCT/SE2018/050035
(87) International publication number: WO 2018/132060

(56) References cited:
- EP-A1- 2 017 794
- WO-A1-2011/069879
- GB-A- 1 263 789
- GB-A- 1 445 621
- JP-U- S5 914 422
- US-A- 2 491 902
- US-A- 3 233 827
- US-A- 4 020 369
- US-A- 4 020 369
- US-A1- 2011 181 399
- US-B2- 7 401 483
- US-B2- 7 948 097
- US-B2- 8 704 625

## Description

### Technical field

The present invention relates generally to a micro transient energy harvesting generator arrangement, MTEHG.

### Background art

Energy harvesting, power harvesting, energy scavenging, and generators thereof, are systems that allows an action, such as a movement, excessive heat, vibration, or any other form of energy that is generated without a specific purpose to be transformed into energy usable to power for example electronic equipment, such as micro controllers. The process of energy harvesting is generally utilized when unwanted or unused energy derived from an external source is available and can be captured and harvested into preferably electric energy. Solutions for energy harvesting are used to power everything from door locks, personal safety equipment to sensors.

For most application areas wherein energy harvesting is utilized relatively low amount of electric energy is harvested. The application areas are thereby generally micro controllers, small wireless communication chips, sensors, or other technologies that requires relatively small amounts of energy.

There are multiple prior art solutions for harvesting energy including everything from harvesting of kinetic energy to energy harvesting from blood sugar. The most relevant background for the invention as disclosed herein are energy harvesting wherein kinetic energy is transformed into electric energy. In prior art it is well known to use energy harvesting systems utilizing rotation to generate energy. One typical application area is door locks, and other locks, wherein the movement of the key is utilized to generate energy through a rotating generator powered by the movement created when a key is entered into the lock.

JPS5914422U disclose an explanatory conventional pulse signal generating device creating a pulse voltage, movement of a spring loaded actuator opens a magnetic circuit and tensions the spring and that snaps the circuit back into a closed state.

The solutions as known in prior art have multiple drawbacks generally in relation to complex constructions, large amounts of moving parts, expensive manufacturing costs, and problems with consistent energy harvesting. One typical example are rotation generators wherein an actuation unit is used in order to actuate a rotating movement inside the generator that in turn generates electricity. Depending of the speed and force that the actuation unit actuates the generator different amounts of electricity is created. This provides a problem for users trying to utilize the technology that are required to find the right speed and force to use the actuation unit with in order for the generators to operate as intended. Furthermore, the inconsistency of the energy amount also provides drawbacks for development of electronics powered by the energy harvesting arrangements of the prior art. Many solutions currently available on the market is hard to use since the system doesn't generate the correct amount of energy if the key is entered to slow which results in that the lock doesn't unlock.

It would thereby be beneficial to provide a solution that overcomes at least some of the problems with the prior art solutions.

### Summary of invention

An object of the present invention is to provide a solution wherein efficient energy harvesting can be conducted independent of the speed of the original movement creating the kinetic energy. Another object is to provide a solution that generates more energy than the conventional solutions. Yet another object is to provide an efficient solution which is easy to assemble, occupies little space, comprises less components, and with a reduced number of moving parts.

Thus, the solution relates to a micro transient energy harvesting generator arrangement comprising an electric coil and a permanent magnet. The generator arrangement further comprises a magnetic circuit constituted of at least the permanent magnet and a rocker, wherein the rocker is arranged to open and close said magnetic circuit. At least part of the permanent magnet is arranged in the magnetic circuit.

According to the invention, a micro transient energy harvesting generator arrangement comprises an electric coil, at least one permanent magnet, a magnetic circuit constituted of at least the permanent magnet, a soft magnetic core going through an electric coil, and a rocker. The rocker is arranged to open and close said magnetic circuit and the arrangement further comprises a spring loaded slide hammer adapted to transfer a force stored in a spring of said spring loaded slide hammer to the rocker and thereby actuating the rocker to open the magnetic circuit. The arrangement further comprises a clutch arm connected to a clutch socket adapted to move a lever into engagement with a protrusion of the spring loaded slide hammer, when an actuation unit is moved into an opening of the arrangement adapted to receive the actuation unit and is engaged with the clutch arm and the lever, wherein the spring is tensioned by the lever actuated by the actuator unit.

It is one advantage with the generator arrangement that the permanent magnet comprises a rocker that rapidly can open and close the circuit. This allows for a compact energy harvesting arrangement with high efficiency.

The soft magnetic core is in one embodiment made from a material with properties adapted for conducting the magnetic field. The soft magnetic core is not magnetic in its own but it conducts the magnetic field from the permanent magnet well. The soft magnetic core can for example also act to concentrate the magnetic field from the permanent magnet.

It is one advantage with the magnetic soft core in the generator arrangement that the permanent magnet via the magnetic soft core is part of the magnetic circuit and that the rocker can rapidly open and close the magnetic circuit.

According to the invention the generator arrangement further comprises a spring loaded slide hammer wherein the spring loaded slide hammer is adapted to transfer a force stored in a spring of said spring loaded slide hammer to the rocker and thereby actuating the rocker to open the magnetic circuit.

It is one advantage with the present solution that the rocker opens the magnetic circuit rapidly.

It is one advantage with the present solution that energy is stored in a spring prior of the conversion of energy into electric current. This allows for a consistent energy harvesting process wherein the variation of the amount of generated energy can be sufficiently controlled.

According to one embodiment the generator arrangement further comprises a housing and said actuation unit is adapted to release the spring loaded hammer by means of the clutch arm and lever once the tension of the spring has reached a predetermined point.

According to one embodiment the generator arrangement further comprises a clutch arm, a lever, and a clutch socket, wherein said clutch arm is connected to the clutch socket and said clutch socket is adapted move the lever into engagement with a protrusion of the spring loaded slide hammer, preferably through displacing the lever in a plane perpendicular to the actuation direction of said lever.

According to the invention, the generator arrangement the actuation unit is adapted to actuate the lever and the lever is adapted to tension the spring of said spring loaded slide hammer through engagement with the protrusion.

It is one advantage with the present solution that a lever can be used in order to ease the energy harvesting process for the end user. Through utilizing the lever it is possible to minimize the required resistance in the actuator unit experienced by the end user. The lever furthermore in one embodiment allows for the generator arrangement to comprise a spring with a high spring rate and thereby enabling energy harvesting of more energy per cycle.

According to the invention, the generator arrangement is the magnetic circuit constituted of at least one permanent magnet.

The amount of energy created is dependent of the intensity of the magnet. If a stronger magnet is used the generator arrangement have the capability to harvest more energy.

According to one embodiment of the generator arrangement is the lever spring loaded at a pivot point sharing a mutual center axis with said clutch socket and said lever is adapted to rebound to its initial position when the actuation unit is removed from the generator arrangement through means of the clutch socket retracting to its initial resting position.

According to one embodiment of the generator arrangement the clutch socket is attached to a combination spring with both tension and torsion properties, and wherein said combination spring is adapted to retract the generator arrangement to its initial resting position, thus reducing the number of components in the assembly.

According to one embodiment of the generator arrangement the slide hammer comprises a slide hammer contact surface and the rocker comprises a rocker contact surface, wherein the slide hammer contact surface is in abutment with the rocker contact surface when the micro transient energy harvesting generator arrangement is in an initial resting state.

According to one embodiment of the generator arrangement the lever is adapted to release its engagement with the protrusion of said spring loaded slide hammer at the predetermined point and wherein the force of said spring is powering the slide hammer towards the rocker.

According to one embodiment of the generator arrangement the generator arrangement is a linear generator.

It is one advantage with the present solution that the generator arrangement in one embodiment is a linear generator. The solution with the rocker and the permanent magnet allows for a simplified solution with a low number of moving parts.

According to one embodiment of the generator arrangement the slide hammer is limited at its extreme position in a tensioned state but unlimited in an extreme position in its non-tensioned state, preferably to achieve the function of a Newton's cradle.

Through allowing the slide hammer to move freely in its non-tensioned state it is assured that the effect of a Newton's cradle is achieved.

It is one advantage with the present solution that this creates an optimum transfer of the impulse force.

According to one embodiment of the generator arrangement the slide hammer contact surface and the rocker contact surface both are substantially shaped as any one of a half circle, curve, or sphere, preferably to enable a fully elastic collision.

It is one advantage with the present solution that the half circle, curve, or sphere shape defines an impulse center enabling the fully elastic collision.

It is one advantage with the present solution that the slide hammer contact surface and the rocker contact surface are shaped to allow for an elastic collision. The elastic collision has the same function as would be found in a Newton's cradle allowing substantially all energy to be transferred from a first to a second body.

According to one embodiment the generator arrangement is adapted to automatically reset to its initial position.

According to one embodiment is the generator arrangement sealed and for safety reasons only usable once. This may for example be for emergency applications. In one embodiment is the generator arrangement pre-loaded at delivery. According to yet another embodiment is the generator sent back to the factory to be recharged.

According to one embodiment the generator arrangement further comprises embedded Radio-frequency identification (RFID) intelligence and a memory.

According to one embodiment the generator arrangement further comprises a rocker rebound spring.

According to one embodiment of the generator is the rocker extending beyond the flow path of the magnetic circuit. The extending portion of said rocker is adapted to interact with means that interacts the generator, such as a weight, a slide hammer, or an actuation unit.

It is one advantage with the present solution that permanent magnet isn't subjected to any knocks or collisions which over time would de-magnetize the permanent magnet.

According to one aspect of generating electricity in a micro transient energy harvesting generator arrangement as defined herein, the generator arrangement comprises an electric coil, a permanent magnet, a spring loaded slide hammer comprising a spring, a magnetic circuit constituted of at least the permanent magnet. The permanent magnet is connected to at least one soft magnetic core going through the electric coil, an opening adapted to receive an actuation unit, a lever, and a rocker, wherein the rocker is arranged to open and close said magnetic circuit and:
- actuate the lever into engagement with the slide hammer,
- tension said slide hammer spring through movement of the lever,
- release said engagement between the lever and the slide hammer when the slide hammer reaches a predetermined point allowing the slide hammer to push through towards the rocker eventually hitting the rocker thus transmitting a force stored in the spring of the spring loaded slide hammer to the rocker and thereby opening said magnetic circuit, and
- dragging the rocker back to the closed position through a magnetic force overcoming the transmitted force and thereby rapidly closing said magnetic circuit.

The person skilled in the art understands that in different embodiments is the micro transient energy harvesting generator suitable for different application areas. Examples of utilization areas are for example one embodiment wherein the generator is designed to be used with a lock. In another embodiment is the generator adapted to be used in a remote control, a hand held weapon, a railroad point, a safety transmitter, or any other form of suitable application area.

According to one embodiment of the linear micro transient energy harvesting generator the housing further comprises a lock, preferably a door lock or a padlock.

According to one embodiment of the linear micro transient energy harvesting generator the opening is a channel adapted to receive a key.

According to one embodiment of the micro transient energy harvesting generator is the actuation unit connected to a trigger, safety pin, or railroad track.

According to one embodiment the generator arrangement further is adapted to receive a current enabling the generator arrangement to be used as an actuator.

It is one advantage that the actuator provides a force impulse.

In one embodiment is the actuator unit actuated through moving the entire actuator unit, in another embodiment is the actuator unit actuated through movement of for example a trigger or a safety pin. In one embodiment is thereby the actuator unit part of another element adapted to be actuated by for example a user.

### Brief description of drawings

The invention is now described, by way of example, with reference to the accompanying drawings, in which:
Fig. 1 illustrates an isometric view of the micro transient energy harvesting generator.
Fig. 2 illustrates one embodiment of the magnetic circuit comprising an electric coil, a permanent magnet, and a rocker.
Fig. 3a illustrates one embodiment of the magnetic circuit wherein before the magnetic circuit is opened.
Fig. 3b illustrates one embodiment of the magnetic circuit wherein the momentum has been transferred to the rocker of the magnetic circuit and the rocker has opened the magnetic circuit.
Fig. 3c illustrates one embodiment of the magnetic circuit wherein the magnetic circuit is closed and in an initial state.
Fig. 3d illustrates part of an AC-cycle diagram wherein half an AC-cycle is illustrated based on how it is generated in the transmission from Fig. 3a to Fig. 3b.
Fig. 3e illustrates part of an AC-cycle diagram wherein half an AC-cycle is illustrated based on how it is generated in the transmission from Fig. 3b to Fig. 3c.
Fig. 4a illustrates an AC-cycle diagram wherein one AC-cycle is illustrated based on how it is generated during one energy harvesting cycle of the micro transient energy harvesting generator.
Fig. 4b illustrates an AC-cycle diagram wherein the AC-cycle of Fig. 3a has been rectified providing only positive voltage.
Fig. 5 illustrates one embodiment of a magnified view of the spring loaded slide hammer and the lever mainly illustrating the engagement between the lever and the slide hammer as well as the engagement between the slide hammer and the rocker.
Fig. 6 illustrates one embodiment of a first state of the micro transient energy harvesting generator and an actuator unit.
Fig. 7 illustrates one embodiment of a second state of the micro transient energy harvesting generator and an actuator unit.
Fig. 8 illustrates one embodiment of a third state of the micro transient energy harvesting generator and an actuator unit.
Fig. 9 illustrates one embodiment of a fourth state of the micro transient energy harvesting generator and an actuator unit.
Fig. 10 illustrates one embodiment of a fifth state of the micro transient energy harvesting generator and an actuator unit.
Fig. 11 illustrates one embodiment of a sixth state of the micro transient energy harvesting generator and an actuator unit.
Fig. 12 illustrates one embodiment of a seventh state of the micro transient energy harvesting generator and an actuator unit.
Fig. 13 illustrates one embodiment of the micro transient energy harvesting generator before the reset to the initial state of the cycle is initiated.
Fig. 14 illustrates one embodiment of the micro transient energy harvesting generator during the reset to the initial state of the cycle.
Fig. 15 illustrates one embodiment of the micro transient energy harvesting generator during the reset to the initial state of the cycle.
Fig. 16 illustrates another embodiment of the micro transient energy harvesting generator.
Fig. 17 illustrates one embodiment of the micro transient energy harvesting generator comprising a rebound spring.
Fig. 18 illustrates another embodiment of the generator arrangement.

### Description of embodiments

In the following, a detailed description of the different embodiments of the invention is disclosed under reference to the accompanying drawings. All examples herein should be seen as part of the general description and are possible to combine in any way of general terms. Individual features of the various embodiments and aspects may be combined or exchanged unless such combination or exchange is clearly contradictory to the overall function of the micro transient energy harvesting generator.

Briefly described the invention relates to a novel micro transient energy harvesting generator arrangement adapted to generate energy through utilizing kinetic energy that has been transformed from a movement or action causing a magnetic circuit to be abruptly interrupted and closed in two steps. In one embodiment is a spring loaded slide hammer adapted to transfer the stored energy into an actuation causing a rocker to open and close a magnetic circuit thereby generating energy. The solution is further described by the appended claims.

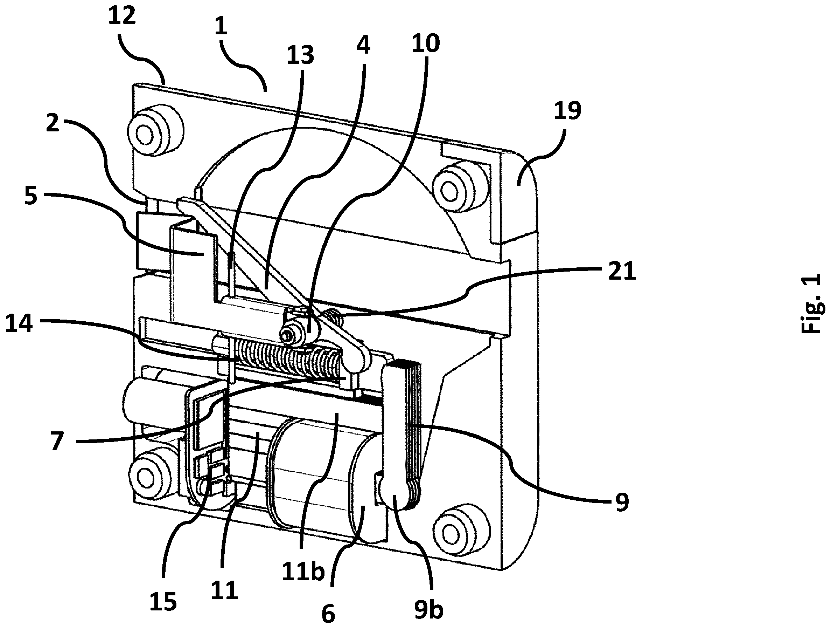

Figure 1 illustrates a micro transient energy harvesting generator arrangement 1 comprising multiple components housed in a housing 12. Depending of the intended application area for the generator arrangement 1 are different components parts of the arrangement. However, in one embodiment as illustrated in Figure 1 the generator arrangement comprises a lever 4, a clutch arm 5, a coupling socket 10, a rocker 9, a spring loaded slide hammer 7, electronics 15, and additional components as will be further described herein.

The housing 12 is adapted to house the components of the micro transient energy harvesting generator 1. The components may in different embodiments be secured in different ways, however in one embodiment as illustrated in Figure 1 are at least some of the components inside said housing 12 secured by means of the housing 12 holding the components in place. For example, the rocker 9 that has an end portion 9b that in one embodiment is adapted to be carried in a slide bearing constituted by the housing 12. Preferably, the end portion 9b is formed with a radius allowing the rocker 9 to be actuated. The housing 12 further comprises hollow sections that allows for example the rocker 9, the clutch arm 5, and the actuation lever 4 to move in at least one intended direction.

The arrangement 1 further comprises an electric coil 6 which is essential for the energy generating process. The electric coil 6 can in different embodiments of the generator arrangement 1 be different types of wound electric coils 6. In one embodiment is the electric coil 6 an electric coil 6 wound directly around the soft magnetic core 11a; 11b, in another embodiment is the electric coil 6 a separate coil 6 placed around the soft magnetic core 11a; 11b. Depending on the desired power output the person skilled in the art understands that different number of turns around the coil 6 as well as the length of the coil thread may be adjusted.

In one embodiment the generator arrangement 1 further comprises a magnetic circuit 41 comprising a permanent magnet 11 and a soft magnetic core 11a; 11b which is partly wound to create an electric coil 6. The magnetic circuit 41 further comprises a rocker 9 adapted to open and close said magnetic circuit.

In one embodiment of the generator arrangement is the housing further enabled to comprise an antenna function through an integrated antenna 19.

In one embodiment the generator arrangement 1 further comprises electronics 15 to handle the electrical current created by the generator 1. In one embodiment the electronics 15 comprises a rectifier and communication means, such as a RFID chip (radio frequency identification).

In one embodiment the generator arrangement 1 further comprises a memory and any one of embedded Radio-frequency identification (RFID), Infrared communication (IR), Near field communication (NFC), and Bluetooth.

In one embodiment of the generator armament 1 the electronics 15 further comprises at least one capacitor.

In one embodiment is the housing 12 part of the object, such as a padlock or a door, which the generator arrangement 1 is arranged within.

In one embodiment is the spring 14 a compression spring 14.

In one embodiment the rocker 9 and the soft magnetic core 11a, 11b is constituted of multiple magnetic layers divided by a thin layer of varnish or lacquer. The multiple layers together constitute the soft magnetic core parts of the magnetic circuit. The multiple layers reduce the eddy currents in the magnetic circuit 41.

Figure 1 further illustrates one embodiment of the micro transient energy harvesting generator 1 wherein the slide hammer 7 is in a neutral position without any tension and the entire generator is in an initial state ready to receive actuation. This is herein referred to as the initial state, the person skilled in the art understands that the initial state in some application areas might not be the first state of use as will be further described below.

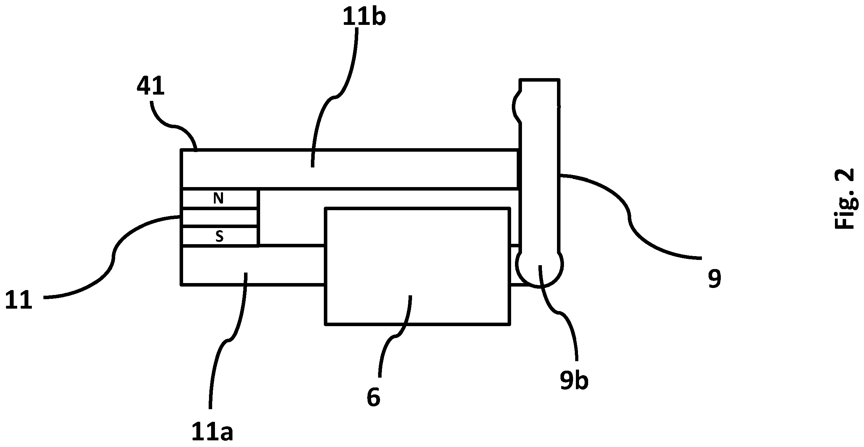

Figure 2 illustrates the generator circuit of the generator arrangement 1 which is a magnetic circuit 41 adapted to generate the energy in said arrangement 1. The magnetic circuit 41 comprises a rocker 9, an electric coil 6, and a permanent magnet 11 connecting two ends of the rocker 9 via the soft magnetic core 11a, 11b creating a circuit. In one embodiment is the rocker 9 extending from said circuit comprising at least one section not constituting the path of the circuit. The magnetic circuit 41 is used to generate the current in the micro transient generator 1. The person skilled in the art understands that figure 2 merely illustrates one embodiment of the magnetic circuit 41 as a general example and that the magnetic circuit 41 may have any size, form, or shape that is suitable for the overall function of the generator 1. In one embodiment is the magnetic circuit 41 constituted by a permanent magnet 11 and a soft magnetic core 11a;11b that is partly wound into an electric coil 6. The magnetic circuit 41 is in one embodiment constituted of one or more permanent magnets. The permanent magnets can in one embodiment be directly connected to each other, in another connected via the soft magnetic core. It is one general characteristic of the magnetic circuit 41 that the circuit 41 in at least one state of the energy harvesting cycle is a closed circuit allowing for magnetic flow through the entire magnetic circuit 41.

Figure 1 further illustrates a north pole N and a south pole S of the permanent magnet 11. The north N and south S poles can in one embodiment be arranged differently, i.e. the polarity of the permanent magnet 11 is not limited by the figures and embodiments herein.

Figure 2 further illustrates a rocker 9 that is part of the magnetic circuit 41 and adapted to open and close the magnetic circuit 41. The magnetic circuit 41 thereby have both an open and closed state. Independent of the state the magnetic circuit 41 exerts a force Fm on the rocker 9 pulling it towards striving to a closed circuit.

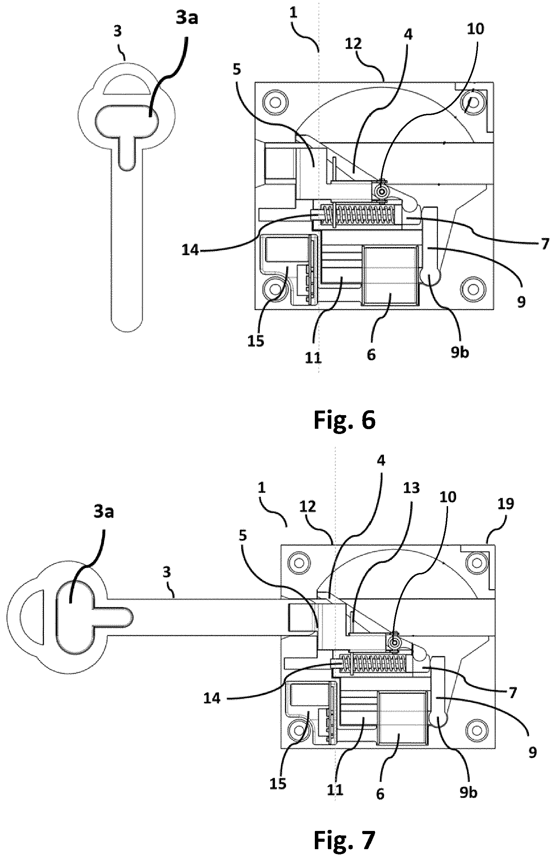

In one embodiment is the clutch arm 5 adapted to be actuated by the actuation unit 3, see for example figures 6-12 and 16. The clutch arm 5 is further adapted to actuate a clutch socket 10, acting as a coupling sleeve, that moves a lever 4 between engagement with a slide hammer 7 and a released state. The lever 4 is further adapted to be actuated by the actuation unit 3 and rotated around a pivot point in order to tension the slide hammer 7. The clutch arm 5 is in one embodiment hinged around an axis 13.

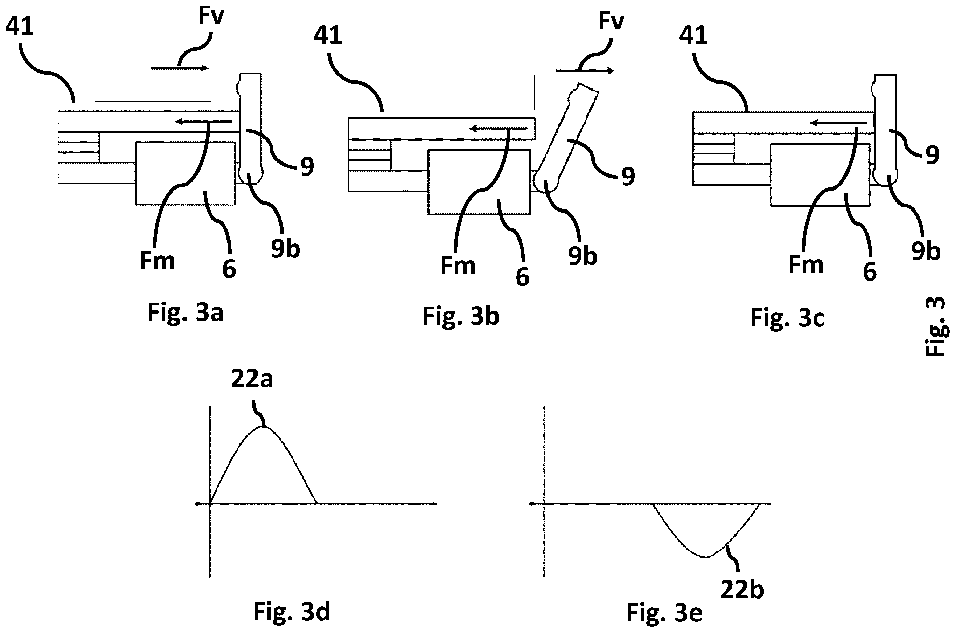

Figure 3 illustrates the method of generating energy in a generator arrangement 1 as claimed by the appended claims. The person skilled in the art understands that such a generator arrangement 1 may be any form of generator arrangement 1 in accordance with the description herein or the appended claims.

The device and method comprises that a magnetic circuit 41 is rapidly opened and rapidly closed generating changes in the magnetic flow of said circuit. The magnetic circuit 41 comprises as previously described a rocker 9 that is adapted to be actuated between an open and closed position wherein the magnetic circuit 41 is opened and closed. In an initial state is the magnetic circuit 41 closed and a magnetic flow exists inside the circuit that retains the rocker 9 in the closed position through a magnetic force Fm, as shown in Figure 3a. An actuation force Fv actuates the rocker 9 to an open position through overcoming the magnetic force Fm as shown in Figure 3b. Figure 3c illustrates the next step of the energy generating method wherein the rocker 9 once again is closed. The magnetic force Fm has brought the rocker 9 back into the closed position. Figure 3d and 3e illustrates the current that is generated when the circuit is rapidly opened (see Figure 3d) and rapidly closed (see Figure 3e). Figures 3d and 3e illustrates AC-cycle diagrams and the currents 22a, 22b are the generated currents. This represent an alternating voltage.

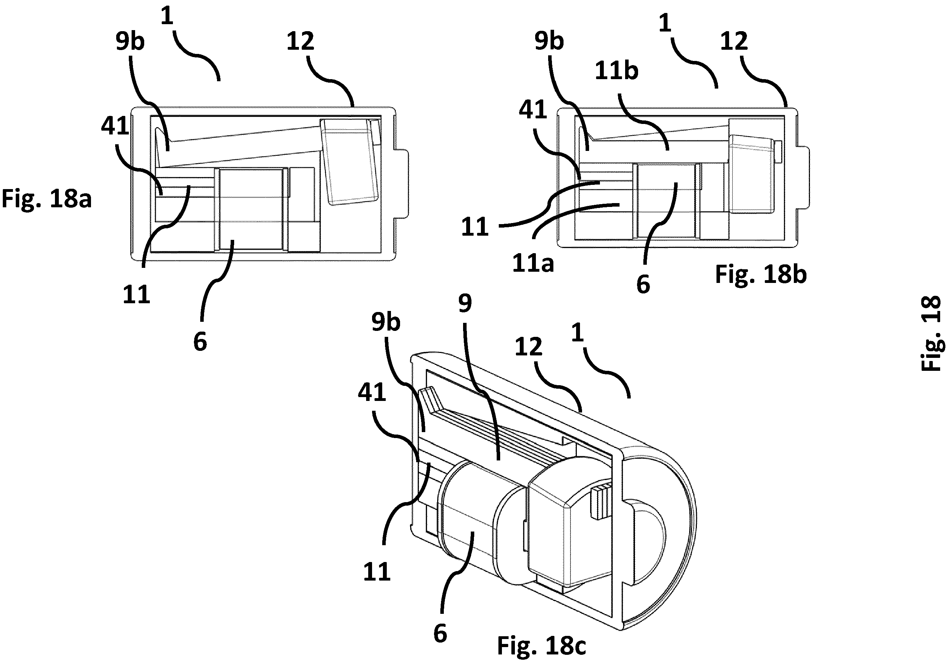

Figure 3a illustrates one embodiment of the magnetic circuit 41 wherein the force Fv in one embodiment can be caused by the spring loaded slide hammer 7 of the micro transient energy harvesting generator 1. The spring of the slide hammer 7 (not shown in Fig. 3) is tensioned or partly tensioned. The spring stores energy Fv that is built up from the movement of an actuation unit 3 actuating the slide hammer 7. Figure 3a illustrates the phase wherein the spring loaded slide hammer 7 is being tensioned. During this phase is the magnetic circuit 41 closed and the rocker 9 is thereby in its closed position. The person skilled in the art further understands that the force Fv in different embodiments may be caused by other means than the spring loaded slide hammer 7. For example, in one embodiment is the force Fv caused by a weight attached to said rocker 9 and the force generated from a rapid movement of the entire arrangement actuated by the mass inertia of the weight. See figure 18a-18c as an illustrative example.

Figure 3b illustrates one embodiment of the magnetic circuit 41 wherein the energy of the force Fv has been transferred to the rocker 9 of the magnetic circuit 41 and the rocker 9 has opened the magnetic circuit 41. In the closed circuit state as illustrated in figure 3a is magnetic energy flowing within the magnetic circuit 41. When the rocker 9 opens upon impact from for example the slide hammer 7 the magnetic flow is rapidly brought to a stop. This change creates an induction impulse 22a in the electric coil 6 that is harvested.

The person skilled in the art understands that the same momentum that the force Fv comprises has transferred to the rocker 9 upon impact or actuation.

Figure 3c illustrates a state of the generator 1 wherein the magnetic force Fm has counteracted the force Fv and the rocker 9 has been dragged into closing the circuit again.

Figure 3c illustrates one embodiment of the magnetic circuit 41 wherein the magnetic circuit 41 is closed and has returned to an initial state. Figure 3c illustrates what has happened after the rocker 9 has reached its end point and the magnetic force Fm aiming to close the magnetic circuit 41 has counter acted the momentum Fv transferred from for example the slide hammer 7 to the rocker 9. When the magnetic circuit 41 closes a similar rapid change occurs when the magnetic flow within the magnetic circuit 41 starts again. This creates a second inductive impulse 22b in the electric coil 6. This impulse is inverted in relation to the first inductive impulse 22a and a bit smaller due to that the change isn't as rapid. It is thereby beneficial for the solution to open the rocker 9 rapidly.

Figure 3d illustrates part of an AC-cycle diagram wherein half an AC-cycle is illustrated based on how it is generated in the transmission from figure 3a to 3b.

Figure 3e illustrates part of an AC-cycle diagram wherein half an AC-cycle is illustrated based on how it is generated in the transmission from figure 3b to 3c.

Figure 3 generally illustrates how the rapid change to the magnetic flux is achieved within the magnetic circuit 41. The person skilled in the art understands that the rapid change to the magnetic flux is relevant for all embodiments of the solution as presented herein.

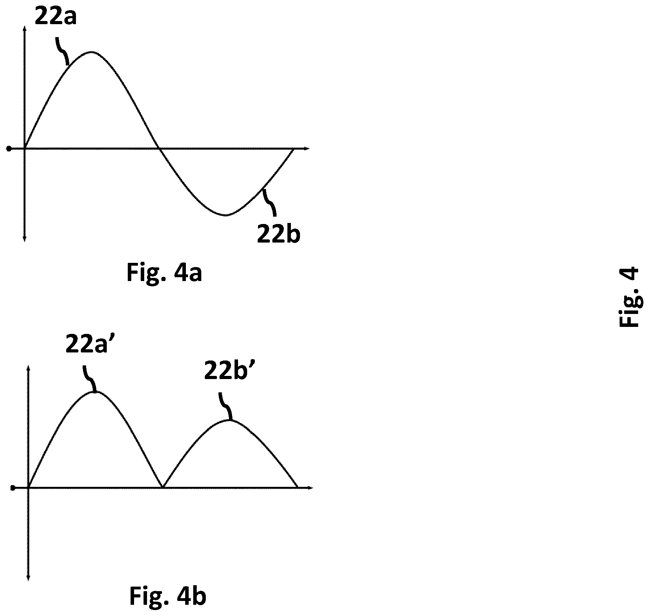

Figure 4a illustrates the AC-cycle 22 of the entire energy harvesting cycle wherein both the portions 22a, 22b from figure 3d and figure 3e are illustrated showing the whole AC-cycle 22. The AC-cycle 22 is rectified through means of the electronics 15 and a DC current is created as illustrated in figure 4b, see the portions 22a' and 22b'.

It should be noted that the positive current 22a is larger than the negative current 22b due to that the magnetic flow of the circuit is more rapidly affected when it is opened than when it is closed due to that the force Fv actuates the rocker 9 more rapidly than the magnetic force Fm brings it back into the closed position.

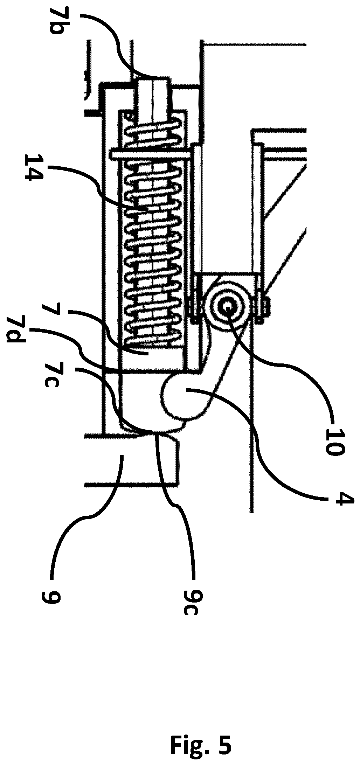

Figure 5 illustrates one embodiment of parts of the energy harvesting generator arrangement as illustrated in Figure 1. For some application areas, such as energy harvesting in locks, it is beneficial to utilize a spring loaded slide hammer 7 in order to actuate the rocker 9. The amount of energy created, see Figure 4, is dependent of how rapidly the magnetic circuit 41 is opened and closed. This has the effect that for application areas wherein an actuation by a user is required, it is beneficial to use a spring loaded slide hammer 7, in order to ensure that the energy harvesting is consistent. For example, a user entering a key into a lock comprising an energy harvesting generator might do this at different speeds and with different force at different instances. This has the effect that if the key, as an actuator unit 3, would engage with the magnetic circuit 41, and the rocker 9, directly the harvested energy would vary between one time and another. Through utilizing a solution wherein energy is built up in a spring 14 of the spring loaded slide hammer 7, it is possible to ensure that the same amount of energy is harvested for every completed cycle.

Developing a solution that is consistent for every completed cycle requires a solution that is self-resetting in a convenient way and in order for the solution to be useable by different users it is beneficial if the solution is easy to actuate. This means that the force required to actuate the generator arrangement shall be kept low while the force exerted by the slide hammer 7 beneficially should be high. This problem has been resolved through using a lever 4 that is actuated into engagement with a protrusion 7d of the slide hammer 7. The lever 4 is connected to a clutch socket 10 that allows the lever 4 to move between engagement with the protrusion 7d and a free position.

The slide hammer 7 and the rocker 9 are further designed to allow the force Fv to effectively be transferred from the slide hammer 7 to the rocker 9 through utilizing rounded or spherical contact surfaces 7c, 9c. This allows for a complete elastic collision, through the impact center.

In greater detail, Figure 5 illustrates a magnified view of the mechanics in the generator arrangement 1 wherein the slide hammer 7, the slide hammer contact surface 7c, the protrusion 7d, the rocker 9, the rocker contact surface 9c, the slide hammer spring 14, and the slide hammer end 7b are illustrated together with the lever 4 and the clutch socket 10. Figure 5 thereby illustrates the moving parts of one embodiment of the generator arrangement 1. It should be noted that the arrangement 1 is not limited to comprising only the moving parts as illustrated in figure 5 and the person skilled in the art understands that parts illustrated in other figures may, or are, part of the solution.

Figure 5 further illustrates the form of the slide hammer contact surface 7c and the rocker contact surface 9c which are curved in order for a complete elastic collision or an elastic collision to take place during the energy harvesting cycle. The arrangement thereby works similar as a Newton's cradle.

Figure 5 further illustrates the protrusion 7d and the engagement between the lever 4 and the protrusion 7d that is utilized to tension the slide hammer spring 14 during the energy harvesting cycle. The protrusion in different embodiments are different forms of engagement means that are adapted to create an engagement between the slide hammer 7 and a lever 4 or the actuator unit 3.

Figure 6 illustrates one embodiment of the energy harvesting arrangement 1 wherein the illustrated embodiment is an energy harvesting arrangement for a lock. The actuator unit 3 is a key and adapted to be entered into the lock and the generator arrangement 1 is adapted to harvest the energy present from the actuator unit 3 being entered into the arrangement 1.

Figure 7 illustrates a first step wherein the actuator unit 3 has been slightly entered into the generator arrangement 1. The actuator unit 3 engages the clutch arm 5 which is connected to the clutch socket 10. The clutch socket 10 is adapted to move the lever 4 towards an engagement with the protrusion 7c of the slide hammer 7 (see Figure 5 for further details). The clutch arm 5 is pivoted at an axis 13 allowing the clutch arm 5 to actuate the clutch socket 10.

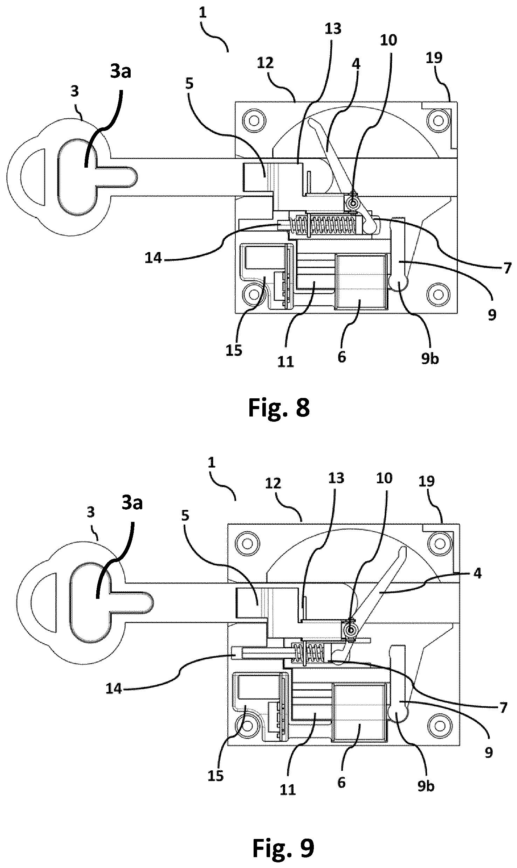

Figure 8 illustrates a second step wherein the actuator unit 3 has been moved further into the generator arrangement 1. In this step is the actuator unit 3 in engagement with the lever 4 and the clutch socket 10 has brought the lever 4 into engagement with the protrusion 7c of the spring loaded slide hammer 7. As shown the lever 4 acts on the slide hammer 7 initiating tensioning of the spring 14.

Figure 9 illustrates a third step wherein the lever 4 has been actuated further and the spring 14 approaches its fully tensioned state.

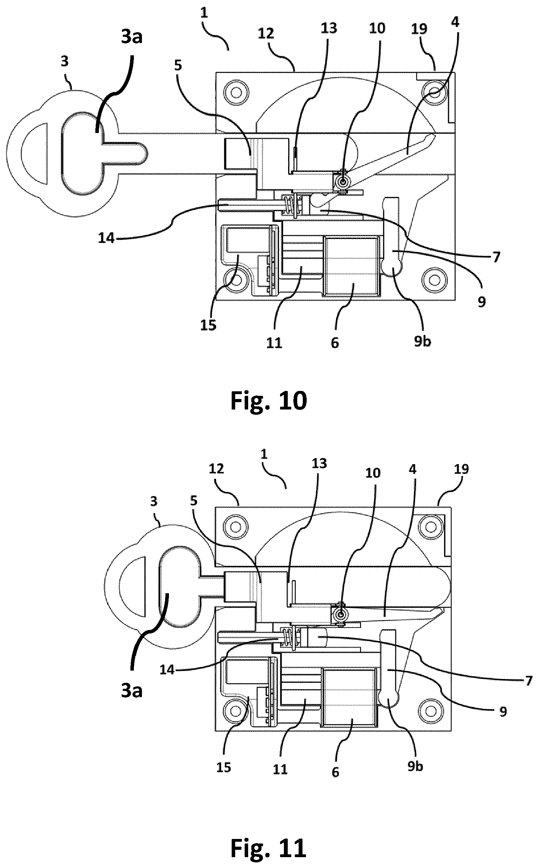

Figure 10 illustrates a fourth step wherein the spring 14 of the spring loaded slide hammer 7 is almost completely tensioned.

Figure 11 illustrates a fifth step wherein the actuator unit 3 is completely entered into the generator arrangement 1. The lever 4 is actuated to its end position and kept in place by the actuator unit 3 extending into the generator arrangement 1. When the lever 4 reaches its end position the engagement between the lever 4 and the protrusion 7c of the slide hammer 7 is released. This is accomplished through the lever 4 being actuated beyond the point wherein the end of the lever 4 engages the protrusion 7c. Figure 11 thereby illustrates a state wherein the spring loaded slide hammer 7 has been released and will initiate its movement back towards the rocker 9.

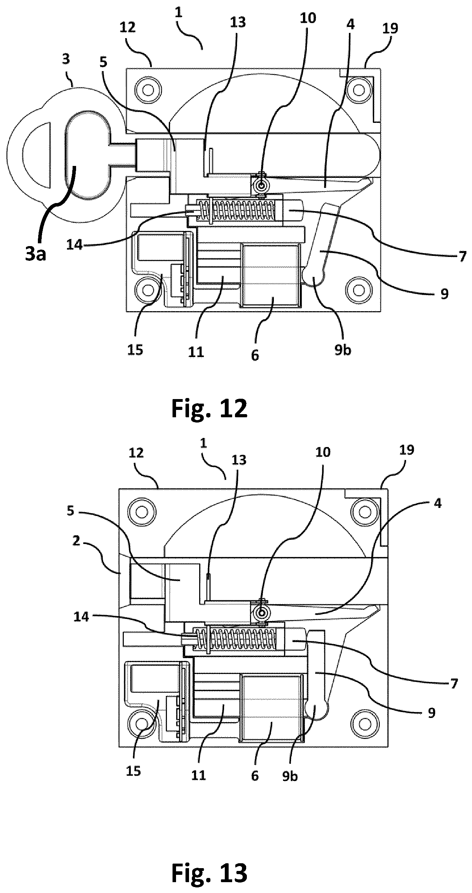

Figure 12 illustrates a sixth step wherein the slide hammer 7 has collided with the rocker 9 creating an elastic collision that transfers a force stored in the spring (actuation force FV) to the rocker 9 and thereby opening the magnetic circuit 41. When the rocker 9 is actuated is a current 22a generated as illustrated in Figure 3d.

Thereby, the slide hammer 7 has reached a point of contact with the rocker 9 and the force Fv has been transferred from the slide hammer 7 to the rocker 9. It should be noted that the slide hammer 7 does not have any defined end point, the movement is stopped due to the collision with the rocker 9. The operation is similar to how a Newton's cradle works. The rocker 9 actuates around its pivot point 9b. Simultaneously is the spring force Fv counteracted by the magnetic force Fm trying to pull the rocker 9 back into reinstating the closed circuit.

Figure 13 illustrates a seventh step of the generator cycle wherein the rocker 9 has been dragged back into closing the magnetic circuit 41 through a magnetic force Fm (see Figure 3 for further details). When the magnetic circuit 41 was closed a second current 22b was generated from the abrupt change in the magnetic flow.

Figure 13 further illustrates that the actuator unit 3 has been removed from the generator arrangement 1 and the arrangement 1 thereby starts to reset the mechanics in order to prepare for a new cycle. When the actuator unit 3 is removed the clutch arm 5 is pushed back by a compression spring arranged in the clutch socket 10 which moves the lever 4 out of the engagement path with the protrusion 7c allowing the lever 4 to move freely back to its initial position due to a torsion spring acting on the lever 4, the position shown in Figure 6.

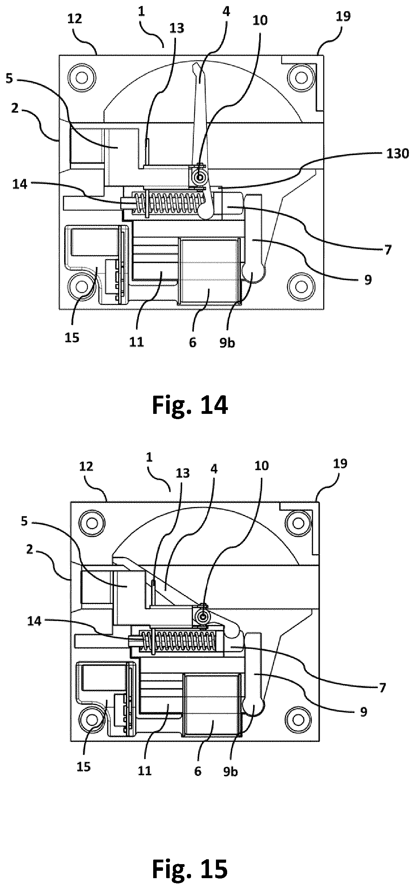

Figure 14 illustrates a step wherein the lever 4 has begun its movement back to its original position. This movement is powered by a torsion spring also located in the clutch socket 10.

**In** one embodiment is the spring of the clutch socket 10 a combined torsion and tension spring. **In** another embodiment is the spring of the clutch socket 10 a combined torsion and compression spring. **In** yet another embodiment the clutch socket 10 comprises two springs chosen from a torsion and tension spring or a torsion and compression spring.

Figure 15 illustrates a step showing the generator arrangement 1 once the reset has been completed and the generator arrangement 1 is ready for a new cycle.

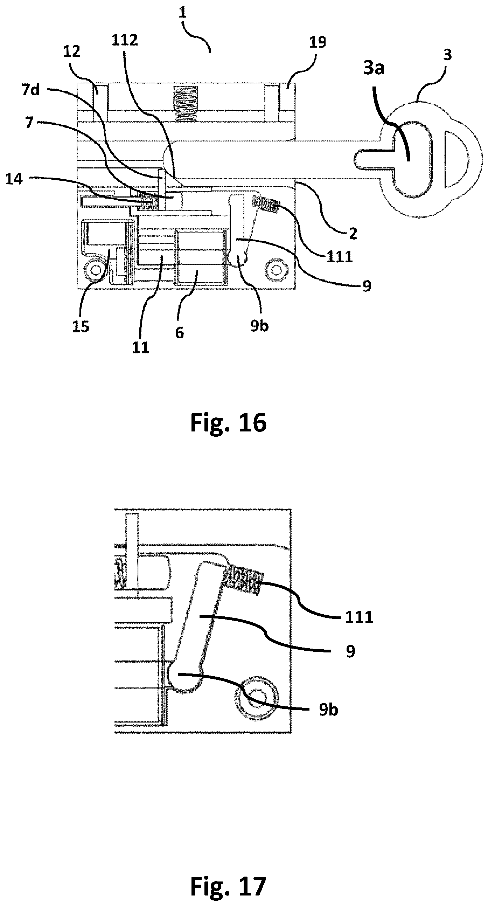

Figure 16 illustrates another embodiment of the generator arrangement 1 wherein the actuator unit 3 directly engages with the slide hammer 7 and the spring 14 is tensioned through the user actuating the actuator unit 3 without any help from a lever. When the actuator unit 3 reaches the point where the spring 14 has been tensioned the actuator unit 3 is pushed away from engagement with the slide hammer protrusion 7d through a surface 112 directing the actuator unit 3 away from the engagement. This releases the spring loaded slide hammer and energy is generated through the solution as previously described.

Figure 17 illustrates an enhancement to the generator arrangement 1 that can be implemented for different embodiments. In one such embodiment the generator arrangement 1 further comprises a rebound spring 111 adapted to enhance the efficiency of the generator in the second part of the AC-cycle. Through utilizing the rebound spring 111 energy preserved in the spring from the rocker 9 compressing it will help to speed up and thereby change how quick the magnetic circuit 41 is closed. This will even out the differences between the first 22a and second 22b part of the cycle making the current substantially equal. This means higher output from the generator arrangement 1.

Figure 18 illustrates another embodiment of the generator arrangement 1 wherein the generator arrangement 1 has been arranged in a housing 12 comprising the entire generator.

In one embodiment the shape complies with standard battery form factors, such as D, C, AA, AAA, AAAA, E-block, or any other battery form.

In one embodiment is embedded RFID intelligence comprised in the actuation unit 3a and/or electronics 15 of the generator arrangement 1.

In one embodiment is at least one memory circuit comprised in the actuation unit 3a and/or in the electronics 15 of the generator arrangement 1.

In one embodiment is the magnetic circuit 41 constituted of at least one soft magnetic core of a Mu-metal. The Mu-metal is beneficial for conduction of magnetic flow. This means that in one embodiment are the magnetic circuit 41 and its parts the soft magnetic core 11a, 11b, and the rocker 9 constituted of a Mu-metal.

In one embodiment the Mu-metal is laminated in thin plates.

In another embodiment is any other form of soft magnetic core or similar material is used.

The person skilled in the art understands that the embodiments as described above are only exemplary embodiments and that the generator arrangement 1 is possible to implement in many different application areas.

In one embodiment is the generator arrangement 1 arranged in an emergency application, such as a distress rocket or a fire alarm. For emergency application could the generator arrangement 1 in one embodiment be adapted for merely single usage meaning that the generator wouldn't reset automatically. One example could be a safety pin retaining the spring loaded slide hammer 7, so called factory loaded, and when the safety pin is removed the spring loaded slide hammer 7 would spring / push through towards the rocker 9, igniting the emergency application.

## Claims

1. A micro transient energy harvesting generator arrangement (1) comprises an electric coil (6), at least one permanent magnet (11), a magnetic circuit (41) constituted of at least the permanent magnet (11), a soft magnetic core (11a, 11b) going through an electric coil (6), and a rocker (9), wherein the rocker (9) is arranged to open and close said magnetic circuit (41), **characterized in that** the arrangement (1) comprises a spring loaded slide hammer (7) adapted to transfer a force (Fv) stored in a spring (14) of said spring loaded slide hammer (7) to the rocker (9) and thereby actuating the rocker (9) to open the magnetic circuit (41), and **in that** the arrangement (1) further comprises a clutch arm (5) connected to a clutch socket (10) adapted to move a lever (4) into engagement with a protrusion (7d) of the spring loaded slide hammer (7), when an actuation unit (3) is moved into an opening (2) of the arrangement (1) adapted to receive the actuation unit (3) and is engaged with the clutch arm (5) and the lever (4), wherein the spring (14) is tensioned by the lever (4) actuated by the actuator unit (3).

2. The generator arrangement (1) according to claim 1, wherein the generator arrangement (1) further comprises a housing (12), and wherein said actuation unit (3) is adapted to release the spring loaded hammer (7) by means of the clutch arm (5) and lever (4) once the tension of the spring (14) has reached a predetermined point.

3. The generator arrangement (1) according to claim 1 or 2, wherein the actuation unit (3) is adapted to actuate the lever (4) and the lever (4) is adapted to tension the spring (14) of said spring loaded slide hammer (7) through engagement with the protrusion (7d).

4. The generator arrangement (1) according to claim 3, wherein said lever (4) is spring loaded at a pivot point sharing a mutual center axis with said clutch socket (10) and said lever (4) is adapted to rebound to its initial position when the actuation unit (3) is removed from the generator arrangement (1) through means of the clutch socket (10) retracting to its initial resting position.

5. The generator arrangement (1) according to any one of claims 3-4, wherein the clutch socket (10) comprises a combination spring and wherein said combination spring is adapted to retract the generator arrangement (1) to its initial resting position.

6. The generator arrangement (1) according to any one of claims 1-5, wherein the slide hammer (7) comprises a slide hammer contact surface (7c) and the rocker (9) comprises a rocker contact surface (9c), wherein the slide hammer contact surface (7c) is in abutment with the rocker contact surface (9c) when the micro transient energy harvesting generator arrangement (1) is in an initial resting state.

7. The generator arrangement (1) according to any one of claims 1-6 wherein the lever (4) is adapted to release its engagement with the protrusion (7d) of said spring loaded slide hammer (7) at the predetermined point and wherein the force of said spring (14) is powering the slide hammer (7) with a predetermined amount of power towards the rocker (9).

8. The generator arrangement (1) according to any one of claims 1-7, wherein the generator arrangement (1) is a linear generator (1).

9. The generator arrangement (1) according to claim 7-8, wherein the slide hammer contact surface (7c) and the rocker contact surface (9c) both are substantially shaped as any one of a half circle, curve, sphere, or any other kind convex surface of at least one hardened material to enable a fully elastic collision.

10. The generator arrangement (1) according to any one of claims 1-9, wherein said generator arrangement further comprises a memory and any one of embedded Radio-frequency identification (RFID), Infrared communication (IR), Near field communication (NFC), and Bluetooth.

11. Method of generating electricity in a micro transient energy harvesting generator arrangement (1) as defined in any one of claims 1-10, wherein said generator arrangement (1) comprises an electric coil (6), a permanent magnet (11), a spring loaded slide hammer (7) comprising a spring (14), a magnetic circuit (41) constituted of at least the permanent magnet (11), the permanent magnet (11) is connected to at least one soft magnetic core 11a; 11b going through the electric coil (6), an opening (2) adapted to receive an actuation unit (3), a lever (4), and a rocker (9), wherein the rocker (9) is arranged to open and close said magnetic circuit (41) wherein the method comprises the steps:
- actuate the lever (4) into engagement with the slide hammer (7),
- tension said slide hammer spring (14) through movement of the lever (4),
- release said engagement between the lever (4) and the slide hammer (7) when the slide hammer (7) reaches a predetermined point allowing the slide hammer (7) to push through towards the rocker (9) eventually hitting the rocker (9) thus transmitting a force (Fv) stored in the spring (14) of the spring loaded slide hammer (7) to the rocker (9) and thereby opening said magnetic circuit (41), and
- dragging the rocker (9) back to the closed position through a magnetic force (Mv) overcoming the transmitted force (Fv) and thereby rapidly closing said magnetic circuit (41).

## Patentansprüche

1. Mikrotransientenenergiegewinnungsgeneratoranordnung (1), die eine elektrische Spule (6), mindestens einen Permanentmagneten (11), einen magnetischen Kreis (41), der aus mindestens dem Permanentmagneten (11) besteht, einen weichmagnetischen Kern (11a, 11b), der durch eine elektrische Spule (6) verläuft, und eine Wippe (9) umfasst, wobei die Wippe (9) angeordnet ist, um den magnetischen Kreis (41) zu öffnen und zu schließen,
**dadurch gekennzeichnet, dass** die Anordnung (1) einen federbelasteten Gleithammer (7) umfasst, der angepasst ist, um eine Kraft (Fv), die in einer Feder (14) des federbelasteten Gleithammers (7) gespeichert ist, auf die Wippe (9) zu übertragen und darüber die Wippe (9) zu betätigen, um den magnetischen Kreis (41) zu öffnen, und **dass** die Anordnung (1) ferner einen Kupplungsarm (5) umfasst, der mit einer Kupplungsbuchse (10) verbunden ist, die angepasst ist, um einen Hebel (4) in Eingriff mit einem Vorsprung (7d) des federbelasteten Gleithammers (7) zu bewegen, wenn eine Betätigungseinheit (3) in eine Öffnung (2) der Anordnung (1) bewegt wird, die angepasst ist, um die Betätigungseinheit (3) aufzunehmen, und mit dem Kupplungsarm (5) und dem Hebel (4) in Eingriff steht, wobei die Feder (14) über den Hebel (4) gespannt wird, der über die Betätigungseinheit (3) betätigt wird.

2. Generatoranordnung (1) nach Anspruch 1, wobei die Generatoranordnung (1) ferner ein Gehäuse (12) umfasst und wobei die Betätigungseinheit (3) angepasst ist, um den federbelasteten Hammer (7) mittels des Kupplungsarms (5) und des Hebels (4) zu lösen, sobald die Spannung der Feder (14) einen zuvor bestimmten Punkt erreicht hat.

3. Generatoranordnung (1) nach Anspruch 1 oder 2, wobei die Betätigungseinheit (3) angepasst ist, um den Hebel (4) zu betätigen und der Hebel (4) angepasst ist, um die Feder (14) des federbelasteten Gleithammers (7) über den Eingriff mit dem Vorsprung (7d) zu spannen.

4. Generatoranordnung (1) nach Anspruch 3, wobei der Hebel (4) an einem Drehpunkt, der eine gemeinsame Mittelachse mit der Kupplungsbuchse (10) teilt, federbelastet ist und der Hebel (4) angepasst ist, um in seine ursprüngliche Position zurückzuspringen, wenn die Betätigungseinheit (3) von der Generatoranordnung (1) entfernt wird, über Mittel der Kupplungsbuchse (10) in ihre ursprüngliche Ruheposition zurückgezogen wird.

5. Generatoranordnung (1) nach einem der Ansprüche 3 bis 4, wobei die Kupplungsbuchse (10) eine Kombinationsfeder umfasst und wobei die Kombinationsfeder angepasst ist, um die Generatoranordnung (1) in ihre ursprüngliche Ruheposition zurückzuziehen.

6. Generatoranordnung (1) nach einem der Ansprüche 1 bis 5, wobei der Gleithammer (7) eine Gleithammerkontaktoberfläche (7c) umfasst und die Wippe (9) eine Wippenkontaktoberfläche (9c) umfasst, wobei die Gleithammerkontaktoberfläche (7c) in Anlage mit der Wippenkontaktoberfläche (9c) steht, wenn sich die Mikrotransientenenergiegewinnungsgeneratoranordnung (1) in einem ursprünglichen Ruhezustand befindet.

7. Generatoranordnung (1) nach einem der Ansprüche 1 bis 6, wobei der Hebel (4) angepasst ist, um seinen Eingriff mit dem Vorsprung (7d) des federbelasteten Gleithammers (7) an dem vorbestimmten Punkt zu lösen, und wobei die Kraft der Feder (14) den Gleithammer (7) mit einer zuvor bestimmten Kraftmenge in Richtung der Wippe (9) antreibt.

8. Generatoranordnung (1) nach einem der Ansprüche 1 bis 7, wobei die Generatoranordnung (1) ein Lineargenerator (1) ist.

9. Generatoranordnung (1) nach den Ansprüchen 7 bis 8, wobei die Gleithammerkontaktoberfläche (7c) und die Wippenkontaktoberfläche (9c) beide im Wesentlichen als ein beliebiges von einem Halbkreis, einer Kurve, einer Kugel oder einer beliebigen anderen konvexen Oberfläche aus mindestens einem gehärteten Material geformt sind, um eine vollständig elastische Kollision zu ermöglichen.

10. Generatoranordnung (1) nach einem der Ansprüche 1 bis 9, wobei die Generatoranordnung ferner einen Speicher und ein beliebiges von eingebetteter Radiofrequenzidentifikation (RFID), Infrarotkommunikation (IR), Nahfeldkommunikation (NFC) und Bluetooth umfasst.

11. Verfahren zum Generieren von Elektrizität in einer Mikrotransientenenergiegewinnungsgeneratoranordnung (1) nach einem der Ansprüche 1 bis 10, wobei die Generatoranordnung (1) eine elektrische Spule (6), einen Permanentmagneten (11), einen federbelasteten Gleithammer (7), umfassend eine Feder (14), einen magnetischen Kreis (41), der aus mindestens dem Permanentmagneten (11) besteht, wobei der Permanentmagnet (11) mit mindesten einem weichmagnetischen Kern (11a, 11b) verbunden ist, der durch die elektrische Spule (6) verläuft, eine Öffnung (2), die angepasst ist, um eine Betätigungseinheit (3) aufzunehmen, einen Hebel (4) und eine Wippe (9) umfasst, wobei die Wippe (9) angeordnet ist, um den magnetischen Kreis (41) zu öffnen und zu schließen,
wobei das Verfahren die Schritte umfasst:
- Betätigen des Hebel (4) in Eingriff mit dem Gleithammer (7),
- Spannen der Gleithammerfeder (14) über eine Bewegung des Hebels (4),
- Lösen des Eingriffs zwischen dem Hebel (4) und dem Gleithammer (7), wenn der Gleithammer (7) einen zuvor bestimmten Punkt erreicht, wobei dem Gleithammer (7) erlaubt wird, in Richtung der Wippe (9) durchzudrücken, wobei er schließlich auf die Wippe (9) trifft, wobei damit eine Kraft (Fv), die in der Feder (14) des federbelasteten Gleithammers (7) gespeichert ist, auf die Wippe (9) übertragen wird und darüber der magnetischen Kreis (41) geöffnet wird, und
- Ziehen der Wippe (9) zurück in die geschlossene Position über eine magnetische Kraft (Mv), die die übertragene Kraft (Fv) überwindet und darüber den magnetischen Kreis (41) schnell schließt.

## Revendications

1. Agencement de générateur de collecte d'énergie micro-transitoire (1) comprenant une bobine électrique (6), au moins un aimant permanent (11), un circuit magnétique (41) constitué d'au moins l'aimant permanent (11), un noyau magnétique doux (11a, 11b) traversant une bobine électrique (6) et un culbuteur (9), dans lequel le culbuteur (9) est conçu pour ouvrir et fermer ledit circuit magnétique (41), **caractérisé en ce que** l'agencement (1) comprend un marteau coulissant à ressort (7) adapté pour transférer une force (Fv) stockée dans un ressort (14) dudit marteau coulissant à ressort (7) vers le culbuteur (9) et ainsi actionner le culbuteur (9) afin d'ouvrir le circuit magnétique (41), et **en ce que** l'agencement (1) comprend en outre un bras d'embrayage (5) relié à une prise d'embrayage (10) adaptée pour déplacer un levier (4) en engagement avec une saillie (7d) du marteau coulissant à ressort (7), lorsqu'une unité d'actionnement (3) est déplacée dans une ouverture (2) de l'agencement (1) adaptée pour recevoir l'unité d'actionnement (3) et est en engagement avec le bras d'embrayage (5) et le levier (4), dans lequel le ressort (14) est tendu par le levier (4) actionné par l'unité d'actionnement (3).

2. Agencement de générateur (1) selon la revendication 1, dans lequel l'agencement de générateur (1) comprend en outre un boîtier (12), et dans lequel ladite unité d'actionnement (3) est adaptée pour libérer le marteau à ressort (7) au moyen du bras d'embrayage (5) et du levier (4) une fois que la tension du ressort (14) a atteint un point prédéterminé.

3. Agencement de générateur (1) selon la revendication 1 ou 2, dans lequel l'unité d'actionnement (3) est adaptée pour actionner le levier (4) et le levier (4) est adapté pour tendre le ressort (14) dudit marteau coulissant à ressort (7) par engagement avec la saillie (7d).

4. Agencement de générateur (1) selon la revendication 3, dans lequel ledit levier (4) est chargé par un ressort au niveau d'un point de pivotement partageant un axe central mutuel avec ladite prise d'embrayage (10) et ledit levier (4) est adapté pour rebondir vers sa position initiale lorsque l'unité d'actionnement (3) est retirée de l'agencement de générateur (1) par le biais de la prise d'embrayage (10) se rétractant vers sa position de repos initiale.

5. Agencement de générateur (1) selon l'une quelconque des revendications 3 à 4, dans lequel la prise d'embrayage (10) comprend une combinaison de ressorts et dans lequel ladite combinaison de ressorts est adaptée pour rétracter l'agencement de générateur (1) vers sa position de repos initiale.

6. Agencement de générateur (1) selon l'une quelconque des revendications 1 à 5, dans lequel le marteau coulissant (7) comprend une surface de contact de marteau coulissant (7c) et le culbuteur (9) comprend une surface de contact de culbuteur (9c), dans lequel la surface de contact de marteau coulissant (7c) est en butée avec la surface de contact de culbuteur (9c) lorsque l'agencement de générateur de collecte d'énergie micro-transitoire (1) est dans un état de repos initial.

7. Agencement de générateur (1) selon l'une quelconque des revendications 1 à 6, dans lequel le levier (4) est adapté pour relâcher son engagement avec la saillie (7d) dudit marteau coulissant à ressort (7) au niveau du point prédéterminé et dans lequel la force dudit ressort (14) sollicite le marteau coulissant (7) avec une quantité prédéterminée de puissance vers le culbuteur (9).

8. Agencement de générateur (1) selon l'une quelconque des revendications 1 à 7, dans lequel l'agencement de générateur (1) est un générateur linéaire (1).

9. Agencement de générateur (1) selon les revendications 7 à 8, dans lequel la surface de contact de marteau coulissant (7c) et la surface de contact de culbuteur (9c) ont toutes deux l'une quelconque parmi la forme d'un demi-cercle, d'une courbe, d'une sphère ou de toute autre type de surface convexe d'au moins un matériau durci pour permettre une collision totalement élastique.

10. Agencement de générateur (1) selon l'une quelconque des revendications 1 à 9, dans lequel ledit agencement de générateur comprend en outre une mémoire et l'un quelconque parmi un système intégré d'identification par radiofréquence (RFID), une communication infrarouge (IR), une communication en champ proche (NFC) et un Bluetooth.

11. Procédé de génération d'électricité dans un agencement de générateur (1) de collecte d'énergie micro-transitoire tel que défini dans l'une quelconque des revendications 1 à 10, dans lequel ledit agencement de générateur (1) comprend une bobine électrique (6), un aimant permanent (11), un marteau coulissant à ressort (7) comprenant un ressort (14), un circuit magnétique (41) constitué d'au moins l'aimant permanent (11), l'aimant permanent (11) est relié à au moins un noyau magnétique doux 11a ; 11b traversant la bobine électrique (6), une ouverture (2) adaptée pour recevoir une unité d'actionnement (3), un levier (4) et un culbuteur (9), dans lequel le culbuteur (9) est agencé pour ouvrir et fermer ledit circuit magnétique (41)
dans lequel le procédé comprend les étapes suivantes :
- actionner le levier (4) pour qu'il s'engage avec le marteau coulissant (7),
- tendre ledit ressort de marteau coulissant (14) par le mouvement du levier (4),
- relâcher ledit engagement entre le levier (4) et le marteau coulissant (7) lorsque le marteau coulissant (7) atteint un point prédéterminé permettant au marteau coulissant (7) de pousser vers le culbuteur (9) et éventuellement frappant le culbuteur (9) transmettant ainsi une force (Fv) stockée dans le ressort (14) du marteau coulissant à ressort (7) vers le culbuteur (9) et ouvrant ainsi ledit circuit magnétique (41), et
- ramener le culbuteur (9) en position fermée par une force magnétique (Mv) surmontant la force transmise (Fv) et fermant ainsi rapidement ledit circuit magnétique (41).
